# EUROPÄISCHE PATENTANMELDUNG

(11) **EP 4 044 087 A1**
(43) Veröffentlichungstag der Anmeldung: **17.08.2022**
(21) Anmeldenummer: 21020073.9
(22) Anmeldetag: 15.02.2021
(51) Int. Cl.: G06Q 20/06, G06Q 20/32

(54) **SYSTEM UMFASSEND EIN SICHERHEITSDOKUMENT UND EIN ELEKTRONISCHES KONTO, ZUORDNUNGSSAMMLUNG UND VERFAHREN ZUM NACHWEIS EINES ZUGEORDNETEN BETRAGS ZU EINEM SICHERHEITSDOKUMENT**

(71) Anmelder: Giesecke+Devrient Currency Technology GmbH, 81677 München (DE)
(72) Erfinder: Mengel, Christoph, 83607 Holzkirchen (DE); Depta, Georg, 83024 Rosenheim (DE); Lesch, Harald, 85646 Anzing (DE); Gawlas, Florian, 80805 München (DE); Hobmeier, Ralf, 80333 München (DE); Hoffmüller, Winfried, 83646 Bad Tölz (DE); Renner, Patrick, 83677 Reichersbeuern (DE)
(74) Vertreter: Giesecke + Devrient IP

(57) **Zusammenfassung**

System (1) umfassend ein Sicherheitsdokument (2) und ein elektronisches Konto (3), wobei das Sicherheitsdokument (1) zumindest ein schaltkreisloses Sicherheitsmerkmal (4) und eine visuell lesbare Seriennummer (5) aufweist, wobei das Sicherheitsdokument (2) von einer autorisierten zentralen Institution (6) ausgegeben wird, wobei das elektronische Konto (3) ausgebildet ist, einen Betrag (16) zu speichern und von einem von der zentralen Institution (6) unterschiedlichen Institut (7) bereitgestellt wird, wobei die Seriennummer (5) des Sicherheitsdokuments (2) dem elektronischen Konto (3) zugeordnet ist und die Zuordnung (9) in einer Zuordnungssammlung (8) gespeichert ist, wobei der Kontoinhaber des elektronischen Kontos (3) derjenige ist, welcher Eigentümer des Sicherheitsdokuments (2) ist.

## Beschreibung

Die Erfindung betrifft ein System. Das System weist ein Sicherheitsdokument und ein elektronisches Konto auf. Das Sicherheitsdokument wiederum weist zumindest ein schaltkreisloses Sicherheitsmerkmal und eine visuell lesbare Seriennummer auf. Weiterhin wird das Sicherheitsdokument von einer autorisierten zentralen Institution ausgegeben. Das elektronische Konto ist ausgebildet, einen Betrag zu speichern und wird von einem von der zentralen Institution unterschiedlichen Institut bereitgestellt. Die Erfindung betrifft auch eine Zuordnungssammlung. Weiterhin betrifft die Erfindung ein Verfahren zum Nachweis eines zugeordneten Betrags zu einem Sicherheitsdokument.

Technische Lösungen bzw. Speichermedien zum Aufbewahren eines Betrags, insbesondere Geldbetrags, sind bekannt. So wird ein Geldbetrag üblicherweise in Form einer Banknote, welche beispielsweise mit einem Papiersubstrat oder einem Polymersubstrat ausgebildet ist, aufbewahrt.

Ein Geldbetrag wird üblicherweise aber auch in einem Magnetspeicher, einem optischen Speicher oder einem elektronischen Speicher, insbesondere einem Halbleiterspeicher, aufbewahrt. Beispiele hierfür sind eine Karte mit Chip, welcher mit einem Geldbetrag aufgeladen werden kann, oder ein Bankkonto, bei welchem der Geldbetrag auf Festplatten der Bank aufbewahrt wird. Der Geldbetrag wird dabei üblicherweise aufgeteilt in Bits gespeichert. Ein einzelnes Bit wird dabei zum Beispiel durch die Magnetisierung eines kleinen Bereichs einer ferromagnetischen Oberfläche gespeichert. Je nachdem, in welche Richtung der Nord- bzw. Südpol dieses Bereichs zeigt, hat das Bit den Wert 0 oder 1. Bei einem Flash-EEPROM-Speicher (EEPROM - englische Abkürzung für electrically erasable programmable read-only memory) werden Informationen, also die Bits, in einer Speichereinheit in Form von elektrischen Ladungen auf einem Floating-Gate oder in einem Charge-Trapping-Speicherelement eines Metall-Isolator-Halbleiter-Feldeffekttransistors gespeichert.

Auch bekannt sind sogenannte Geldkarten, bei welchen eine Chipkarte mit einem elektronischen Schattenkonto verknüpft ist. Chipkarte und Schattenkonto werden dabei von derselben Institution, insbesondere einem Kreditinstitut, herausgegeben bzw. geführt. Ähnliche Chipkarten mit Schattenkonto sind auch von Verkehrsbetrieben für den öffentlichen Personennahverkehr oder Betriebsgastronomie-Betreibern bekannt.

Die Aufbewahrung des Geldbetrags ist also stets mit einer physischen Eigenschaft des jeweiligen Speichers verknüpft, ohne welche der Geldbetrag nicht vorhanden wäre.

Die verschiedenen Aufbewahrungsformen haben jedoch nicht nur Vorteile. So ist die Aufbewahrung des Betrags durch Banknoten beispielsweise platzraubend, während die Aufbewahrung auf einer Festplatte, von beispielsweise einer Bank, bei fehlender Fernzugriffsmöglichkeit, beispielsweise übers Internet, immobil ist.

Geldkarten haben den Nachteil, dass eine eigene Infrastruktur nötig ist, mit welcher der Chip ausgelesen werden kann und Sicherheitsmerkmale, sofern welche vorhanden sind, überprüft werden können.

Es ist Aufgabe der Erfindung, einen Betrag sicherer aufzubewahren und dabei vorhandene Infrastruktur anpassungsarm nutzen zu können.

Diese Aufgabe wird erfindungsgemäß durch ein System, eine Zuordnungssammlung und ein Verfahren mit den Merkmalen gemäß den jeweiligen unabhängigen Ansprüchen gelöst. Vorteilhafte Ausführungen der Erfindung sind Gegenstand der abhängigen Ansprüche.

Ein erfindungsgemäßes System umfasst ein Sicherheitsdokument, insbesondere eine Banknote, und ein elektronisches Konto, insbesondere ein Bankkonto. Das Sicherheitsdokument weist zumindest ein schaltkreisloses Sicherheitsmerkmal und eine visuell lesbare Seriennummer auf. Weiterhin wird das Sicherheitsdokument von einer autorisierten zentralen Institution, insbesondere einer Zentralbank, ausgegeben. Das elektronische Konto ist ausgebildet, einen Betrag, insbesondere einen Geldbetrag, zu speichern und wird von einem von der zentralen Institution unterschiedlichen Institut, insbesondere einem Kreditinstitut, bereitgestellt.

Als ein wichtiger Gedanke der Erfindung ist es vorgesehen, dass, die Seriennummer des Sicherheitsdokuments dem elektronischen Konto zugeordnet ist und die Zuordnung in einer Zuordnungssammlung gespeichert ist, Der Eigentümer des Sicherheitsdokuments ist Kontoinhaber des elektronischen Kontos.

Der Erfindung liegt die Erkenntnis zu Grunde, dass ein Sicherheitsdokument einer zentralen Institution mit einem elektronischen Konto verknüpft werden kann. Dadurch können die Vorteile beider Aufbewahrungsformen kombiniert werden.

Für das Sicherheitsdokument gibt es beispielsweise schon Prüfeinrichtungen, welche Sicherheitsmerkmale des Sicherheitsdokuments lesen und prüfen können. Im Fall von einem als Banknote ausgebildeten Sicherheitsdokument kann beispielsweise eine Auszahlungseinheit bzw. ein üblicher Geldautomat von der Stange genutzt werden, um die Seriennummer der Banknote zu Lesen und auf Echtheit zu überprüfen.

Zusätzlich kann das Sicherheitsdokument aber auch mit dem elektronischen Konto verknüpft werden und somit einen krummen Betrag zugewiesen bekommen, wie zum Beispiel 122,50 €. Vorteilhaft ist, dass sich der durch die Banknote und das elektronische Konto gespeicherte Betrag einfach anpassen lässt.

So kann eine 5-Euro-Banknote beispielsweise über die Zuordnung des elektronischen Kontos mit dem Betrag des elektronischen Kontos, beispielsweise 122,50 €, ergänzt werden. Der Inhaber der Banknote kann dann beispielsweise ein Produkt im Wert von 127,50 € mit dieser 5 Euro Banknote bezahlen. Das elektronische Konto wird, vorzugsweise automatisch, mitübertragen.

Insbesondere ist es vorgesehen, dass das elektronische Konto anonym ausgebildet ist, und vorzugsweise automatisch, also ohne weitergehende Registrierung, dem Eigentümer bzw. Inhaber des Sicherheitsdokuments zugeordnet wird.

Alternativ kann es sein, dass ein neuer Inhaber des Sicherheitsdokuments eine Verpflichtung auferlegt bekommt, das elektronische Konto innerhalb einer bestimmten Frist nach Inhaberwechsel auf seine Person registrieren zu lassen.

Vorzugsweise ist es vorgesehen, dass die Seriennummer durch eine Prüfsumme geschützt ist. Die Prüfsumme kann beispielsweise durch eine vorgegebene Prüfgleichung, in welche die Ziffern der Seriennummer einfließen, gebildet werden. Vorteilhaft ist dies, da das Abändern der Seriennummer bzw. das Manipulieren der Banknote dadurch erschwert wird. Die Aufbewahrung des Betrags kann dadurch sicherer erfolgen. Durch die Prüfsumme kann auch das Zuordnen des Kontos zu dem Sicherheitsdokument sicherer erfolgen. Es wird dadurch vermieden, dass das Konto irrtümlich einem falschen Sicherheitsdokument zugeordnet wird.

Weiterhin ist es vorzugsweise vorgesehen, dass die Seriennummer als fluoreszierende Farbe und/oder Laserschnitt und/oder Lasermarkierung und/oder Farbe mit Infrarotmerkmalen und/oder Farbe mit magnetischen Eigenschaften ausgebildet ist. Dadurch ist die Seriennummer sicherer bzw. fälschungssicherer ausgebildet. Die Aufbewahrung des Betrags kann dadurch sicherer erfolgen.

Weiterhin ist es vorzugsweise vorgesehen, dass das Sicherheitsdokument einen Zusatzcode aufweist, welche zusammen mit der Seriennummer dem elektronischen Konto zugeordnet ist, und insbesondere in der Zuordnungssammlung gespeichert ist. Der Zusatzcode ist vorzugsweise fälschungssicher ausgebildet und beispielsweise als weitere Seriennummer oder Datumsangabe ausgebildet.

Weiterhin ist es vorzugsweise vorgesehen, dass die Höhe des Betrags des elektronischen Kontos durch die Seriennummer zusammen mit dem Zusatzcode abgefragt wird. Durch den Zusatzcode kann eine unberechtigte Abfrage nach dem der Seriennummer zugeordneten Betrag des elektronischen Kontos behindert werden. Letztendlich ist es vorzugsweise vorgesehen, dass die abfragende Stelle zusätzlich zur Seriennummer auch den Zusatzcode kennt, um die Abfrage erfolgreich beantwortet zu bekommen.

Weiterhin ist es vorzugsweise vorgesehen, dass die Höhe des Betrags des elektronischen Kontos durch die Seriennummer zusammen mit einer Geheimzahl abgefragt wird. Durch die Geheimzahl, welche beispielsweise als Persönliche Identifikationsnummer (PIN) zur Mehrfachverwendung oder Transaktionsnummer (TAN) zur Einmalverwendung ausgebildet ist, kann die Abfrage sicherer ausgeführt werden.

Weiterhin ist es vorzugsweise vorgesehen, dass die Zuordnungssammlung von dem Institut verwaltet wird. Die Zuordnungssammlung ist vorzugsweise als Datenbank ausgebildet. Durch die gemeinsame Verwaltung von dem elektronischen Konto und der Zuordnungssammlung kann das System sicherer betrieben werden.

Weiterhin ist es vorzugsweise vorgesehen, dass der zu speichernde Betrag des elektronischen Kontos durch einen Maximalbetrag begrenzt ist. Insbesondere ist es vorgesehen, dass der Maximalbetrag der höchsten Denomination der Landeswährung abzüglich des sicherheitsdokumenteigenen Betrags entspricht. Durch den Maximalbetrag kann dann beispielsweise kein höherer Betrag anonym bewegt werden, als es durch herkömmliche Banknoten ohne zugeordnetes elektronisches Konto auch möglich ist. Die Sicherheit bezüglich Geldwäsche kann dadurch also weiter erhöht werden.

Weiterhin ist es vorzugsweise vorgesehen, dass das Sicherheitsdokument als Banknote ausgebildet ist, welche zusätzlich zu dem zugeordneten Betrag des elektronischen Kontos auch noch den Wert der eigenen Denomination aufweist. Weist die Banknote beispielsweise einen Wert von 10 € auf und auf dem zugeordneten elektronischen Konto werden 30 € aufbewahrt, dann weist die Banknote zusammen mit dem elektronischen Konto einen Wert von 40 € auf.

Gemäß einer alternativen Ausführungsform ist es vorzugsweise vorgesehen, dass das Sicherheitsdokument als Banknote ausgebildet ist, welche als Wert nur den zugeordneten Betrag des elektronischen Kontos aufweist. So kann es beispielsweise sein, dass eine "X"-Banknote ausgegeben wird, welche sämtliche Sicherheitsmerkmale der wertaufweisenden Banknoten aufweist, aber keinen eigenen Wert hat, also keinen Betrag aufbewahrt. Diese würde dann auch von Geschäften nicht akzeptiert werden. Vorteilhaft ist dies, da dadurch vorgebeugt werden kann, dass ein Inhaberwechsel versehentlich stattfindet, ohne dass das zugeordnete elektronische Konto berücksichtigt wird.

Vorzugsweise ist das Sicherheitsdokument rubbelfeldfrei ausgebildet. Das heißt insbesondere, dass das Sicherheitsdokument kein Rubbelfeld, insbesondere kein Einmal-Rubbelfeld, aufweist, unter welchem sich beispielsweise ein privater Schlüssel eines Privat-Öffentlichen-Schlüsselpaares verbirgt. Ein Rubbelfeld umfasst beispielsweise einen Papierträger mit Aufdruck und einen maschinell aufgebrachten Aufkleber, der auf einer transparenten Folie eine leicht wegzurubbelnde Schicht aus gummiähnlicher Substanz aufweist. Ist die wegzurubbelnde Schicht weggerubbelt, so ist das Rubbelfeld üblicherweise verbraucht. Durch die rubbelfeldfrei Ausgestaltung ist das Sicherheitsdokument langfristiger nutzbar.

Die Erfindung betrifft auch eine Zuordnungssammlung. In der Zuordnungssammlung wird eine visuell lesbare Seriennummer eines Sicherheitsdokuments, insbesondere einer Banknote, welches von einer autorisierten zentralen Institution, insbesondere einer Zentralbank, ausgegeben ist und zumindest ein schaltkreisloses Sicherheitsmerkmal aufweist, zu einem elektronischen Konto, insbesondere ein Bankkonto, welches ausgebildet ist einen Betrag zu speichern und von einem von der zentralen Institution unterschiedlichen Institut, insbesondere einem Kreditinstitut, bereitgestellt ist, gespeichert ist.

Insbesondere ist die Zuordnungssammlung als, vorzugsweise relationale, Datenbank ausgebildet.

Die Erfindung betriff weiterhin auch ein Verfahren. Bei dem erfindungsgemäßen Verfahren wird ein zugeordneter Betrag zu einem Sicherheitsdokument nachgewiesen. Es werden folgende Schritte durchgeführt:
- Erfassen einer Seriennummer des Sicherheitsdokuments durch ein, insbesondere mobiles, Endgerät;
- Senden der Seriennummer von dem Endgerät an eine endgerätexterne Zuordnungssammlung;
- Suchen der Seriennummer in der Zuordnungssammlung;
- falls die gesuchte Seriennummer in der Zuordnungssammlung gefunden wird, Senden der Höhe des Betrags, welcher der Seriennummer zugeordnet ist, von der Zuordnungssammlung zum Endgerät; und
- Ausgeben der Höhe des Betrags durch das Endgerät.

Vorzugsweise ist es vorgesehen, dass die Echtheit des Sicherheitsdokuments beim Erfassen der Seriennummer geprüft wird.

Insbesondere wird die Höhe des Betrags nur zum Endgerät gesendet, falls zur Zuordnungssammlung zusätzlich zur Seriennummer ein Zusatzcode, insbesondere vom Endgerät, gesendet wird. Durch den Zusatzcode kann verhindert werden, dass die Höhe des Betrags von einem unberechtigten Nutzer abgefragt wird.

Bei der Ausgabe der Höhe des Betrags durch das Endgerät, wird die Höhe des Betrags beispielsweise mit einem Display und/oder einem Lautsprecher des Endgeräts ausgegeben.

Die mit Bezug auf das erfindungsgemäße System vorgestellten bevorzugten Ausführungsformen und deren Vorteile gelten entsprechend für die erfindungsgemäße Zuordnungssammlung und das erfindungsgemäße Verfahren und andersherum.

Weitere Merkmale der Erfindung ergeben sich aus den Ansprüchen, den Figuren und der Figurenbeschreibung.

Ausführungsbeispiele der Erfindung werden nachfolgend anhand einer schematischen Zeichnung näher erläutert.

Dabei zeigen:
- Fig. 1: eine schematische Darstellung eines Ausführungsbeispiels eines erfindungsge-mäßen Systems mit einem Sicherheitsdokument, einem elektronischen Konto und einer Zuordnungssammlung; und
- Fig. 2: eine schematische Darstellung des Sicherheitsdokuments mit einem Sicherheits-merkmal und einer Seriennummer.

In den Figuren werden gleiche oder funktionsgleiche Elemente mit den gleichen Bezugszeichen versehen.

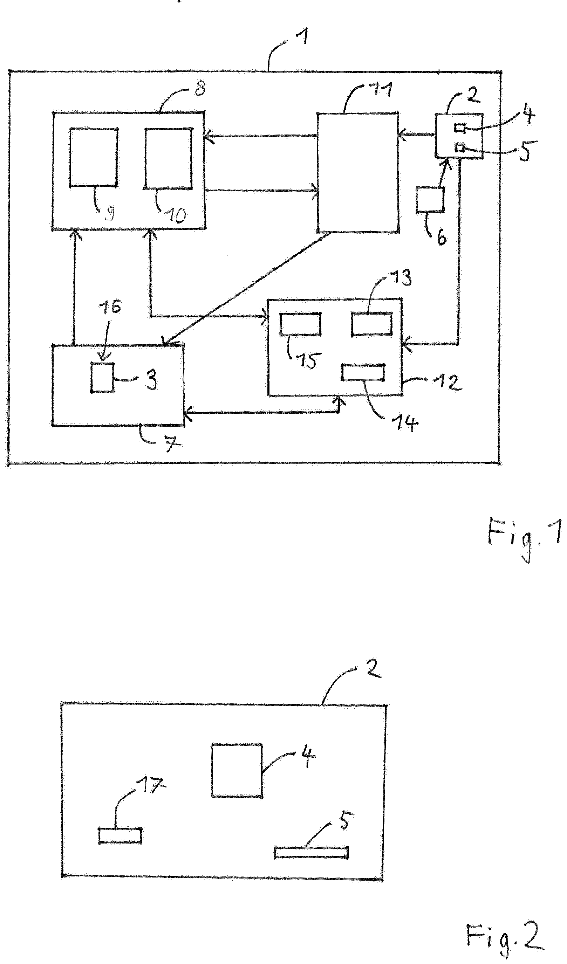

Fig. 1 zeigt schematisch ein System 1. Das System 1 umfasst ein Sicherheitsdokument 2 und ein elektronisches Konto 3. Das Sicherheitsdokument 2 weist ein schaltkreisloses Sicherheitsmerkmal 4 und eine visuell lesbare Seriennummer 5 auf.

Das Sicherheitsdokument 2 ist insbesondere als Banknote ausgebildet. Das Sicherheitsmerkmal 4 ist beispielsweise als Hologramm, Folienpatch, Sicherheitsfaden und/oder Lumineszenzmerkmal ausgebildet.

Die Seriennummer 5 kann beispielsweise auf das Sicherheitsdokument aufgedruckt, eingeprägt, ausgestanzt, eingraviert und/oder freigelegt sein.

Weiterhin kann die Seriennummer 5 beispielsweise als fluoreszierende Farbe, als Laserschnitt oder Laserablation z.B. in Folienelementen oder Farbfeldern ausgebildet sein. Die Seriennummer 5 kann auch durch Substratverfärbung, z.B. Schwarzfärbung oder durch Einsatz lasersensitiver Farben, vorzugsweise innenliegend in Verbundsubstraten, ausgebildet sein.

Ergänzend oder alternativ kann die Seriennummer 5 als Codierung, z.B. Laserschnitt oder mit speziellen IR-Farben (IR - infrarot), die beispielsweise nur mittels Filter, z.B. im Mobiltelefon, verifiziert werden können.

Weiterhin umfasst das System 1 gemäß dem Ausführungsbeispiel eine autorisierte zentrale Institution 6, ein Institut 7 und eine Zuordnungssammlung 8.

Die zentrale Institution 6 ist insbesondere als Zentralbank oder Notenbank ausgebildet.

Das Institut 7 ist insbesondere als Kreditinstitut oder Geldinstitut ausgebildet. Das Institut 7 ist von der zentralen Institution verschieden ausgebildet.

Die Zuordnungssammlung 8 ist insbesondere als Datenbank oder Liste ausgebildet. Die Zuordnungssammlung 8 kann von dem Institut 7 umfasst bzw. verwaltet werden. Alternativ kann die Zuordnungssammlung 8 auch von einer institutsfremden Einrichtung umfasst bzw. verwaltet werden.

Die Zuordnungssammlung 8 umfasst insbesondere eine Mehrzahl von Seriennummern von Sicherheitsdokumenten und eine Mehrzahl von Kontonummern von elektronischen Konten.

Die Zuordnungssammlung 8 weist gemäß dem Ausführungsbeispiel eine Zuordnung 9 auf. Durch die Zuordnung 9 ist die jeweilige Seriennummer 5 dem jeweiligen elektronischen Konto 3 zugeordnet.

Weiterhin kann die Zuordnungssammlung 8 einen Betragstand 10 aufweisen. Der Betragsstand 10 speichert die Höhe eines Betrag 16, welchen das Konto 3 aufweist.

Der Betragsstand 10 ist insbesondere mit der Zuordnung 9 verbunden. So kann über die Seriennummer 5 der Betragsstand 10 abgefragt werden.

Gemäß dem Ausführungsbeispiel weist das System 1 weiterhin ein Endgerät 11 und eine Auszahlungseinrichtung 12 auf.

Das Endgerät 11 ist dazu ausgebildet, die Seriennummer 5 zu erfassen und an die Zuordnungssammlung 8 zu übertragen. Weiterhin ist das Endgerät 11 dazu ausgebildet, den Betragstand 10 von der Zuordnungssammlung 8 zu empfangen.

Das Endgerät 11 kann beispielsweise als tragbarer Personal Computer, Smartphone oder Smartwatch ausgebildet sein. Das Endgerät 11 kann auch mit der Auszahlungseinrichtung 12 kombiniert bzw. zusammengefasst sein.

Die Auszahlungseinrichtung 12 umfasst gemäß dem Ausführungsbeispiel insbesondere eine Banknotenverifizierungseinheit 13, eine Authentisierungseinheit 14 und eine Geldkassetteneinheit 15.

Die Banknotenverifizierungseinheit 13 ist dazu ausgebildet, das Sicherheitsdokument 2 zu überprüfen und, insbesondere anhand des Sicherheitsmerkmals 4, als echt bzw. als ordnungsgemäß von der zentralen Institution 6 ausgegeben zu erkennen.

Die Authentisierungseinheit 14 ist ausgebildet, die gesicherte Verbindung zum elektronischen Konto 3 bereitzustellen. Der Betrag 16 kann dann entweder durch die Auszahlungseinrichtung 12 in Form von Banknoten ausgezahlt werden oder elektronisch auf ein anderes Konto des Einzahlers des Sicherheitsdokuments 2 verbucht werden.

Für den Fall, dass die Auszahlungseinrichtung 12 den Betrag 16 in Banknoten auszahlt, können diese Banknoten von der Geldkassette 15 bereitgestellt werden. Die Geldkassette 15 oder eine weitere Geldkassette kann auch genutzt werden, um das eingezahlte Sicherheitsdokument 2 aufzubewahren.

Fig. 2 zeigt in schematischer Darstellung das Sicherheitsdokument 2. Gemäß dem Ausführungsbeispiel ist das Sicherheitsdokument 2 als Banknote ausgebildet.

Das Sicherheitsdokument 2 weist das Sicherheitsmerkmal 4 und die Seriennummer 5 auf.

Weiterhin weist das Sicherheitsdokument einen Zusatzcode 17 auf. Der Zusatzcode 17 ist zusammen mit der Seriennummer 5 dem elektronischen Konto 3 zugeordnet. Insbesondere ist es vorteilhaft, wenn die Höhe des Betrags 16 des elektronischen Kontos 3 nur durch die Seriennummer 5 zusammen mit dem Zusatzcode 17 abgefragt werden kann. Dadurch kann verhindert werden, dass die Höhe des Betrags 16 bzw. der Kontostand unberechtigterweise abgefragt wird, beispielsweise durch Raten der Seriennummer 5.

Der Zusatzcode kann beispielsweise als zur Seriennummer 5 zusätzliche Nummer ausgebildet sein.

Das Aufladen bzw. Zuordnen des Sicherheitsdokuments 2 mit bzw. zu dem Betrag 16 kann beispielsweise von Konto 3 erfolgen. Das Konto 3 kann beispielsweise als Bankkonto oder als Konto von einem der vielfältigen Zahlungsdienstleister ausgebildet sein.

Ergänzend oder alternativ kann das Aufladen bzw. Zuordnen des Sicherheitsdokuments 2 mit bzw. zu dem Betrag 16 mit Bargeld an einem Geldautomaten mit Einzahlfunktion, bzw. auch an einem Bankschalter erfolgen. Diese Funktion kann durch das Institut 7 zum Beispiel auch über das Internet für ein Endgerät bereitgestellt werden, das Zugriff auf das Konto 3 und ein bekanntes Bankkonto ermöglicht.

Eine Verifikation des Guthabens bzw. des Betrags 16 des mit dem Sicherheitsdokument verbundenen Kontos 3 kann wie folgt durchgeführt werden. Eine Verifikation wird beispielsweise beim Autokauf vom Autoverkäufer durchgeführt. Eine Verifikation umfasst insbesondere folgende Schritte:
- Prüfung der Echtheit und Unversehrtheit des Sicherheitsdokuments 2 inklusive der Seriennummer 5 und dem Zusatzcode 17;
- Eingabe der Seriennummer 5 und des Zusatzcodes 17 in eine Anwendung des elektronischen Endgeräts 11;
- Senden der Seriennummer 5 und des Zusatzcodes 17 mit der Anfrage nach dem Kontostand bzw. Betragsstand 10 an die Zuordnungssammlung 8;
- Bei gültiger Seriennummer 5 und gültigem Zusatzcode 17: Rückantwort mit dem Kontostand bzw. Betragsstand 10 des Sicherheitsdokuments;
- Bei ungültigem Zusatzcode 17 zur Seriennummer 5: Fehlermeldung und Aufforderung zur erneuten Eingabe des Zusatzcodes 17.

Der Zusatzcode 17 wird eingeführt um aus Gründen der Sicherheit oder des Datenschutzes ein automatisiertes Suchen nach Kontoständen zu erschweren. Nach falscher Eingabe des Zusatzcodes 17 ist das Banknoten-Kontosystem bzw. die Zuordnungssammlung 8 für eine bestimmte Zeit für das anfragende Endgerät 11 gesperrt. Diese Sperrzeit verlängert sich je nach Anzahl der Fehlversuche.

Ergänzend oder alternativ zum Zusatzcode 17 kann auch ein sogenanntes Captcha (completely automated public Turing test to tell computers and humans apart) für die Anfrage genutzt werden, um rein maschinelle Anfragen zu verhindern.

Das Verfahren erlaubt dann jedem Nutzer der Zugang zu einem Sicherheitsdokument 2 hat oder hatte den Kontostand zu erfragen, aber erschwert es für einen Angreifer Kontostände durch erratene Seriennummern auszukundschaften.

Das Abheben des Geldbetrags bzw. Betrags 16 durch eine sichere Überprüfung der Echtheit des Sicherheitsdokuments 2 durch die Auszahlungseinrichtung 12, beispielsweise einem Geldautomaten mit Einzahlfunktion, oder einen Bankangestellten erfolgen.

Das Verfahren ermöglicht einen Transportschutz bei Barzahlungen. Großbetragszahlungen in bar sind mit bisher bekannten Verfahren üblicherweise ein Risiko beim Transport des Geldes. Es droht Verlust oder Diebstahl. Wird ein Kaufpreis beispielsweise erst vor Ort verhandelt, muss der maximal mögliche Betrag abgehoben und als Barbetrag mitgeführt werden. Die hier beschriebene Lösung bzw. das System 1 benötigt keinen Transport großer Bargeldmengen, sondern nur einen einzigen Schein, nämlich das Sicherheitsdokument 2, da das Aufladen des passenden Betrags sicher und flexibel vor Ort per mobilem Endgerät erfolgen kann.

Durch das Sicherheitsdokument 2 mit dem zugeordneten Konto 3 kann auch der Platzbedarf eines Geldbetrags zur sicheren Aufbewahrung verringert werden. Die Kosten der Wertaufbewahrung hängen üblicherweise direkt von der Größe ab. Ein einzelner Schein, wie das Sicherheitsdokument 2, lässt sich günstiger aufbewahren als viele Wertgegenstände, also beispielsweise mehrere Banknoten oder Münzen.

Gemäß einem weiteren Ausführungsbeispiel kann es ausreichen nur die Seriennummer 5 zu kennen, um den Betrag 16 auf das Konto 3 abzuspeichern bzw. das Konto 3 aufzuladen. Derjenige der das Konto 3 aufladen möchte, muss also nicht im Besitz des Sicherheitsdokuments 2 sein.

So können beispielsweise Eltern ihrem Kind in der Ferne, beispielsweise auf Urlaubsreise, den Betrag 16 auf einfache Weise zukommen lassen. Dazu ist es lediglich nötig, dass das Kind den Eltern die Seriennummer 5 seines Sicherheitsdokuments 2 mitteilt.

Gemäß einem weiteren Ausführungsbeispiel kann der Betrag 16 in einer Währung ausgebildet sein, welcher von der Währung des Sicherheitsdokuments 1 unterschiedlich ist. So kann der Betrag 16 beispielsweise als Fremdwährung ausgebildet sein.

Es kann auch sein, dass der Betrag 16 als Kryptowährung ausgebildet ist.

## Patentansprüche

1. System (1) umfassend ein Sicherheitsdokument (2) und ein elektronisches Konto (3), wobei das Sicherheitsdokument (1) zumindest ein schaltkreisloses Sicherheitsmerkmal (4) und eine visuell lesbare Seriennummer (5) aufweist, wobei das Sicherheitsdokument (2) von einer autorisierten zentralen Institution (6) ausgegeben wird, wobei das elektronische Konto (3) ausgebildet ist, einen Betrag (16) zu speichern und von einem von der zentralen Institution (6) unterschiedlichen Institut (7) bereitgestellt wird,
**dadurch gekennzeichnet, dass**
die Seriennummer (5) des Sicherheitsdokuments (2) dem elektronischen Konto (3) zugeordnet ist und die Zuordnung (9) in einer Zuordnungssammlung (8) gespeichert ist, wobei der Kontoinhaber des elektronischen Kontos (3) derjenige ist, welcher Eigentümer des Sicherheitsdokuments (2) ist.

2. System (1) nach Anspruch 1, wobei
die Seriennummer (5) durch eine Prüfsumme geschützt ist.

3. System (1) nach Anspruch 1 oder 2, wobei
die Seriennummer (5) als fluoreszierende Farbe und/ oder Laserschnitt und/ oder Lasermarkierung und/oder Farbe mit Infrarotmerkmalen und/oder Farbe mit magnetischen Eigenschaften ausgebildet ist.

4. System (1) nach einem der vorhergehenden Ansprüche, wobei
das Sicherheitsdokument (2) einen Zusatzcode (17) aufweist, welche zusammen mit der Seriennummer (5) dem elektronischen Konto (3) zugeordnet ist.

5. System (1) nach Anspruch 4, wobei
die Höhe des Betrags (16) des elektronischen Kontos (3) durch die Seriennummer (5) zusammen mit dem Zusatzcode (17) abgefragt wird.

6. System (1) nach einem der vorhergehenden Ansprüche, wobei
die Höhe des Betrags (16) des elektronischen Kontos (3) durch die Seriennummer (5) zusammen mit einer Geheimzahl abgefragt wird.

7. System (1) nach einem der vorhergehenden Ansprüche, wobei
das elektronische Konto (3) anonym ausgebildet ist.

8. System (1) nach einem der vorhergehenden Ansprüche, wobei
die Zuordnungssammlung (8) von dem Institut (7) verwaltet wird.

9. System (1) nach einem der vorhergehenden Ansprüche, wobei
der speicherbare Betrag (16) des elektronischen Kontos (3) durch einen Maximalbetrag begrenzt ist.

10. System (1) nach einem der vorhergehenden Ansprüche, wobei
das Sicherheitsdokument (2) als Banknote ausgebildet ist welche zusätzlich zu dem zugeordneten Betrag (16) des elektronischen Kontos (3) auch noch den Wert der eigenen Denomination aufweist.

11. System (1) nach einem der Ansprüche 1 bis 9, wobei
das Sicherheitsdokument (2) als Banknote ausgebildet ist, welche als Wert nur den zugeordneten Betrag (16) des elektronischen Kontos (3) aufweist.

12. Zuordnungssammlung (8), in welcher eine Zuordnung (9) einer visuell lesbaren Seriennummer (5) eines Sicherheitsdokuments (2), welches von einer autorisierten zentralen Institution (6) ausgegeben ist und zumindest ein schaltkreisloses Sicherheitsmerkmal (4) aufweist, zu einem elektronischen Konto (3), welches ausgebildet ist einen Betrag (16) zu speichern und von einem von der zentralen Institution (6) unterschiedlichen Institut (7) bereitgestellt ist, gespeichert ist.

13. Verfahren zum Nachweis eines zugeordneten Betrags (16) zu einem Sicherheitsdokument (2), bei welchem folgende Schritte durchgeführt werden:
- Erfassen einer Seriennummer (5) des Sicherheitsdokuments (2) durch ein Endgerät (11);
- Senden der Seriennummer (5) von dem Endgerät (11) an eine endgerätexterne Zuordnungssammlung (8);
- Suchen der Seriennummer (5) in der Zuordnungssammlung (8);
- Falls die gesuchte Seriennummer (5) in der Zuordnungssammlung (8) gefunden wird, Senden der Höhe des Betrags (16), welcher der Seriennummer (5) zugeordnet ist, von der Zuordnungssammlung (8) zum Endgerät (11); und
- Ausgeben der Höhe des Betrags (16) durch das Endgerät (11).

14. Verfahren nach Anspruch 13, wobei
die Echtheit des Sicherheitsdokuments (2) beim Erfassen der Seriennummer (5) geprüft wird.
